# EUROPÄISCHE PATENTSCHRIFT

(11) **EP 2 169 362 B1**
(45) Veröffentlichungstag und Bekanntmachung des Hinweises auf die Patenterteilung: **07.05.2014**
(21) Anmeldenummer: 08015983.3
(22) Anmeldetag: 11.09.2008
(51) Int. Cl.: G01F 23/04

(54) **Rührstab zum Rühren und Messung von Flüssigkeiten**
Stirring stick for stirring and metering fluids
Bâtonnet d'agitation pour remuer et mesurer des liquides

(43) Veröffentlichungstag der Anmeldung: 31.03.2010
(73) Patentinhaber: J. Wagner GmbH, 88677 Markdorf (DE)
(72) Erfinder: Goehring, Alfred, 88682 Salem (DE); Jeltsch, Thomas, 88048 Friedrichshafen (DE); Welte, Christoph, 88662 Ueberlingen (DE)
(74) Vertreter: Engelhardt, Volker

(56) Entgegenhaltungen:
- EP-A- 1 279 523
- US-A- 2 392 731
- US-A- 4 142 402
- US-A- 4 574 621

## Beschreibung

Die Erfindung bezieht sich auf eine Vorrichtung zum Rühren und zum Dosieren des Mischungsverhältnisses von verschiedenartigen Flüssigkeiten, insbesondere von Farben und Verdünnungsmitteln, bestehend aus einem Rührstab und einem Vorratsbehälter, in dem die zu durchmischenden Flüssigkeiten eingefüllt sind.

Aus der US 4,574,621 ist ein solcher Rührstab zu entnehmen, der aus einem Griffbereich und einem die Viskosität von Flüssigkeiten messenden Messbereich besteht, der gleichzeitig zum Durchmischen der Flüssigkeiten verwendet wird. Der Messbereich zeichnet sich dadurch aus, dass in die Stirnseite des Rührstabes ein V-förmig ausgebildeter Schlitz eingearbeitet ist. Um die Viskosität der in dem Vorratsbehälter eingefüllten Flüssigkeiten nach deren Vermischung bestimmen zu können, ist seitlich neben dem V-förmigen Schlitz eine Messskala aufgedruckt.

Aufgrund der geometrischen Ausbildung des Schlitzes bleibt nämlich hoch viskose Flüssigkeit bereits im breitesten Bereich des Schlitzes haften, wohingegen Flüssigkeiten mit geringer Viskosität einen engeren Seitenabstand der gegenüberliegenden Ränder des Schlitzes benötigen, um haften zu bleiben.

Mit Hilfe des V-förmigen Schlitzes und der Messskala kann daher bestimmt werden, welche Viskosität eine Flüssigkeit mit mehreren Komponenten aufweist. Dies ist beispielsweise bei der Versprühung von Farben und Lacken oder dergleichen erforderlich, denn oftmals weisen die aufzutragenden Farben eine für den manuellen Auftrag mittels Pinsel, Rolle oder dergleichen bestimmte Viskosität auf, die bei der Bearbeitung mit Spritzpistolen zu dickflüssig sind. In diesem Fall ist der Farbe Verdünnungsmittel beizumengen, um die Viskosität zu verringern, so dass die derart durchmischte Farbe von der Spritzpistole versprüht werden kann.

Als nachteilig bei dem Rührstab nach der US 4,574,621 hat sich herausgestellt, dass mit Hilfe der Messskala keine zuverlässige Aussage getätigt werden kann, ob die beigemischte Menge von Lösungsmitteln ausreichend ist, um die korrekte Viskosität für die verdünnte Flüssigkeit zu erreichen. Vielmehr ist nach jedem Füllvorgang der Rührstab nach der Durchmischung aus der Flüssigkeit hoch zu ziehen, um festzustellen, ob die korrekte Viskosität für die Verarbeitung der Flüssigkeit vorliegt.

Darüber hinaus wird die aufgedruckte Messskala beim Verrühren der Flüssigkeit abgedeckt, so dass diese nicht mehr lesbar bzw. erkennbar ist. Der Benutzer des Rührstabes hat sich daher die Messskala einzuprägen und den entsprechenden Wert einem bestimmten Bereich des Schlitzes gedanklich zuzuordnen, um zu wissen, ob die vom Hersteller der Spritzpistole angegebene Viskosität für die Verarbeitung der Farbe erreicht ist. Des Weiteren liefert dieser Rührstab keine Erkenntnisse für den Benutzer, wie viel Lösungsmittel in den Vorratsbehälter zusätzlich eingefüllt wurde.

Aus der DE 20 2005 020 437 U1 kann eine Vorrichtung zur Einstellung des Mischungsverhältnisses in einem Farbbehälter entnommen werden. Der Farbbehälter weist eine sich konisch verjüngende Außenmantelfläche auf. Um nunmehr die Füllstandshöhe im Inneren des Farbbehälters in Beziehung setzen zu können zu der einzufüllenden Menge von Lösungsmitteln ist eine Schablone vorgesehen, die außerhalb seitlich neben dem Farbbehälter angebracht wird und deren Außenkontur an die Mantelfläche des Farbbehälters angepasst ist. Auf der Außenseite der Schablone sind verschiedene Messskalen aufgedruckt, durch die die entsprechende Füllstandshöhe, die momentan im Inneren des Farbbehälters eingebracht ist, in Beziehung mit dem zusätzlich eingefüllten Volumen von Lösungsmitteln gesetzt wird.

Folglich kann der Benutzer anhand der Füllstandshöhe erkennen, welchen prozentualen Anteil an Lösungsmittel in Bezug auf die eingefüllte Menge der Farbe zusätzlich einzufüllen ist.

Als nachteilig bei diesem Stand der Technik hat sich herausgestellt, dass der Benutzer nach wie vor einen Rührstab für die Durchmischung von Flüssigkeiten mit unterschiedlichen Komponenten benötigt, denn die Schablone ist für Rührzwecke nicht geeignet. Des Weiteren ist bei diesem Stand der Technik als nachteilig einzustufen, dass die einzelnen Messskalen auf der Außenseite der Schablone aufgedruckt sind und dass diese außerhalb des Farbbehälters zur Bestimmung der Füllstandshöhe und der zusätzlich einzufüllenden Menge von Lösungsmitteln angeordnet sind, denn dadurch hat der Benutzer die Befüllung des Farbbehälters auf Augenhöhe vorzunehmen, um erkennen zu können, welche Veränderungen der Füllstandshöhe im Inneren des Farbbehälters bezogen auf die Messskala der Schablone erfolgt.

Für Farbbehälter, deren Mantelfläche nicht transparent ist, kann die Messschablone nicht eingesetzt werden. Nach der Vermischung ist die verdünnte Farbe umzufüllen; dies führt zu Verschmutzungen und Farbverlusten.

Es ist daher Aufgabe der Erfindung eine Vorrichtung der eingangs genannten Gattungen derart weiterzubilden, dass mit dieser sowohl unmittelbar die Durchmischung der Flüssigkeiten, die aus mehreren Komponenten zusammengesetzt sein kann, durchführbar ist und gleichzeitig festgestellt werden kann, welche zusätzliche Menge an Flüssigkeit in den Vorratsbehälter zu der bereits in den Vorratsbehälter eingebrachten Flüssigkeitsmenge eingefüllt ist.

Diese Aufgabe wird von den Merkmalen in den kennzeichnenden Teilen der Patentansprüche 1 oder 2 gelöst. Die Merkmale des kennzeichnenden Teils von Patentanspruch 1 und 2 können dabei zur Lösung der Aufgabe miteinander kombiniert werden.

Weitere vorteilhafte Weiterbildungen der Erfindung ergeben sich aus den Unteransprüchen.

Dadurch, dass die Messöffnungen, die Messkörper und die Messstege in ihrer Abmessung, die in Richtung der Längsachse des Rührstabes verläuft, an die Volumenänderung im Inneren des Vorratsbehälters angepasst sind, und zwar derart, dass mit dem Anstieg der Füllstandshöhe im Inneren des Vorratsbehälters exakt ablesbar ist, welcher zusätzlicher prozentualer Anteil in den Vorratsbehälter eingefüllt wurde, kann der Benutzer das Mischungsverhältnis der zu verarbeitenden Flüssigkeiten exakt einstellen, denn der Hersteller von Farbe oder Spritzpistolen kann für jede zu verarbeitende Farbe in Bezug auf das verwendete Spritzgerät angeben, welche Menge an Lösungsmitteln bezogen auf das Volumen der zu verarbeitenden Farbe zu verwenden ist.

Aufgrund der räumlichen Ausgestaltung der Messöffnungen, Messstege und Messkörper ist zudem gewährleistet, dass selbst durch Farbabdeckungen eine zuverlässige und sichere Bestimmung der Füllstandshöhe und der zusätzlich eingebrachten Menge an Flüssigkeiten bestimmt werden kann, und zwar unabhängig davon, ob die Außenwand des Vorratsbehälters transparent oder undurchsichtig ist. Diese in den Rührstab eingearbeiteten Messöffnungen bzw. die an diesem angeformten Messkörper sind nämlich auch von oben gut ablesbar und erkennbar, so dass die Änderung der Füllstandshöhe durch die Öffnung des Vorratsbehälters erkennbar ist. Zudem kann die verdünnte Farbe unmittelbar in den Vorratsbehälter eingefüllt und durchmischt werden, die an die Spritzpistole anbringbar ist. Dadurch wird kein zusätzlicher Mischbecher benötigt, so dass eine Umfüllung der Flüssigkeit in den Vorratsbehälter entfällt. Verschmutzungen oder Farbverlust durch das Umschütten der Flüssigkeit werden folglich vermieden.

In der Zeichnung ist ein erfindungsgemäßes Ausführungsbeispiel einer Vorrichtung zum Rühren und zum Dosieren des Mischungsverhältnisses von Flüssigkeiten mit sieben verschiedenen Ausführungsvarianten eines Rührstabes dargestellt, die nachfolgend näher erläutert werden. Im Einzelnen zeigt:
- Figur 1: eine Vorrichtung, bestehend aus einem Vorratsbehälter und einem in diesen eingesteckten Rührstab in einer ersten Ausführungsvariante mit sechs Messöffnungen und fünf Messstegen zur Bestimmung der Füll- standshöhe der in den Vorratsbehälter eingefüllten Flüssigkeit, im Schnitt von vorne,
- Figur 2: die Vorrichtung gemäß Figur 1 von der Seite,
- Figur 3: den Rührstab gemäß Figur 1 von vorne,
- Figur 4: eine zweite Ausführungsvariante eines Rührstabes, in den in die beiden Schmalseiten Messöffnungen und Messstege, die trapezförmig ausge-staltet sind, eingearbeitet sind,
- Figur 5: eine dritte Ausführungsvariante eines Rührstabes, an den Messkörper angeformt und Messöffnungen eingearbeitet sind, deren geometrische Ausgestaltung vieleckig oder elliptisch ausgebildet sind bzw. auf den Messkörper aufgedruckt sind,
- Figur 6: eine vierte Ausführungsvariante eines Rührstabes in perspektivischer Ansicht, an den drei Messkörper angeformt sind, die verschwenkbar mit dem Rührstab verbunden sind, von vorne,
- Figur 7: den Rührstab gemäß Figur 6 im Schnitt,
- Figur 8: eine fünfte Ausführungsvariante eines Rührstabes, an den sieben Messkörper angeformt sind, die pyramidenförmig ausgebildet sind, von vorne,
- Figur 9: den Rührstab gemäß Figur 8, im Schnitt,
- Figur 10: eine sechste Ausführungsvariante eines Rührstabes, in dessen eine Schmalseite treppenförmig ausgestaltete Messöffnungen eingearbeitet sind, und
- Figur 11: eine siebte Ausführungsvariante eines Rührstabes, in den sägezahnar-tige Messöffnungen in eine der Schmalseiten eingearbeitet sind.

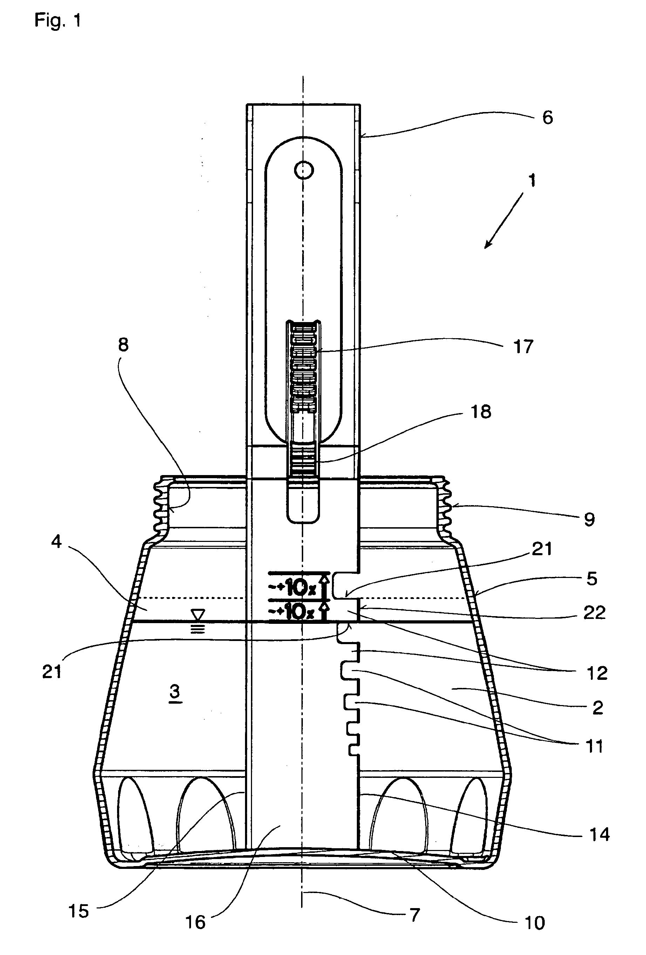

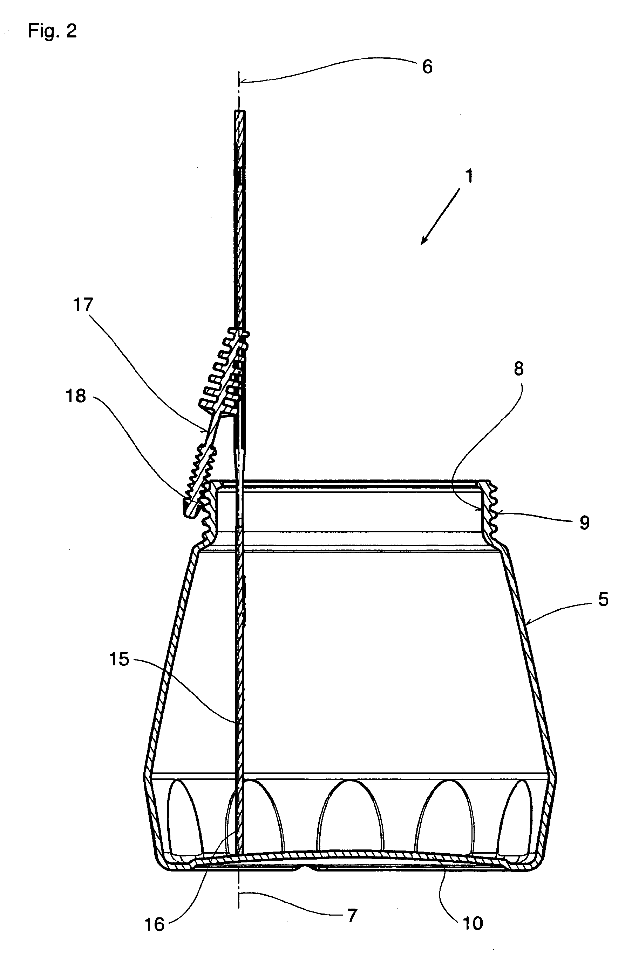

Die in den Figuren 1 und 2 abgebildete Vorrichtung 1 besteht aus einem Vorratsbehälter 5 und einem Rührstab 6. Der Vorratsbehälter 5 dient dazu, Flüssigkeiten 2, nämlich Farbe 3 und Verdünnungsmittel 4, aufzunehmen, die mittels des Rührstabes 6 durchmischt werden. Der Vorratsbehälter 5 kann nach der Durchmischung der Flüssigkeiten 2 über ein Außengewinde 9 an eine nicht dargestellte Spritzpistole angeschlossen werden, so dass die Flüssigkeiten 2 über die Spritzpistole an Wänden, Decken und sonstigen Bauwerken und Oberfächen von Gegenständen aufgetragen werden können.

Oftmals ist die im Fachhandel erhältliche Farbe 3, die für die manuelle Auftragsbearbeitung mittels Pinseln, Rollen oder dergleichen geeignet ist, für die Verarbeitung mit Hilfe einer Spritzpistole nicht brauchbar. Die Viskosität der Farbe 3 kann nämlich bei der Verarbeitung mittels Spritzpistolen dazu führen, dass die Düse in der Spritzpistole verstopft und die Farbe 3 nicht optimal mittels der Spritzpistole auf die zu bearbeitenden und abzudeckenden Flächen aufgetragen werden kann. Dieses Problem wird von dem Fachhandel und den Herstellern von Spritzpistolen seit langen Jahren erkannt und es werden Messbecher, Messdosen usw. bereitgestellt, auf denen angegeben ist, welches Verdünnungsverhältnis die Farbe 3 mit den Verdünnungsmitteln 4, beispielsweise Wasser, zu versetzen ist, um eine optimale Bearbeitung der Flüssigkeiten 2 durch die Spritzpistole erreichen zu können.

Um nunmehr die Durchmischung der Flüssigkeiten 2 mittels des Rührstabes 6 und auch die Dosierung des Mischverhältnisses mittels des Rührstabes 6 in einem Arbeitsgang vornehmen zu können, sind in den Rührstab 6 gemäß den Figuren 1 bis 3 sechs Messöffnungen 11 in eine Schmalseite 14 des Rührstabes 6 eingearbeitet. Zwischen zwei benachbarten Messöffnungen 11 ist jeweils ein rechteckförmiger Messsteg 12 vorgesehen. Die rechteckförmig ausgestalteten Messöffnungen 11 liegen fluchtend und parallel zu der Längsachse 7 des Rührstabes 6. Jede horizontal, also senkrecht zu der Längsachse 7 des Rührstabes 6,verlaufende Kante der Messstege 12 kann dadurch als Messflanke 21 angesehen werden. Der Pegel der Flüssigkeit 2 wird gemäß Figur 1 in fluchtende Übereinstimmung mit einer der vorhandenen Messflanken 21 gebracht. Der vertikale Abstand zwischen zwei benachbarten Messflanken 21 ist als Messabstand 22 anzusehen, dessen Abmessung im prozentualen bzw. linearen Verhältnis zu der Volumenänderung des Vorratsbehälters 5 steht. Dies bedeutet, dass der Messabstand 22 im Ausführungsbeispiel und den Figuren 1 bis 3 eine 10 %-Erhöhung der eingefüllten Flüssigkeit 2 entspricht.

Der Rührstab 6 ist in eine in den Vorratsbehälter 5 eingearbeitete Einfüllöffnung 8 eingesteckt und steht auf dem Boden 10 des Vorratsbehälters 5 auf. Der Messabstand 22 der Messöffnungen 11 und der Messstege 12, die parallel zu der Längsachse 7 des Rührstabes verlaufen, sind dabei derart ausgestaltet, dass durch diese der Anstieg der Füllstandshöhe in dem Vorratsbehälter 5 prozentual in Beziehung stehen.

Dies ist schematisch dargestellt, denn die in den Vorratsbehälter 5 eingefüllte Farbe 3 soll nunmehr mit dem Verdünnungsmittel 4 angereichert werden. Bei der abgebildeten Füllstandshöhe der Farbe 3 wird davon ausgegangen, dass zunächst eine Erhöhung des Volumens um 10 % mit Verdünnungsmittel 4 ausreichend ist, um eine optimale für die Spritzpistole zu verarbeitende Flüssigkeit 2 zu erhalten. Dabei ist der Abstand zwischen den Messflanken 21 derart an den Vorratsbehälter 5 angepasst, dass die sich verjüngende Innenkontur in Richtung der Einfüllöffnung 8 berücksichtigt ist.

Der Messabstand 22 zwischen zwei Messflanken 21 der Messstege 12 entsprechen daher jeweils einer Erhöhung des Füllstandes um 10 % im Inneren des Vorratsbehälters 5.

Unabhängig davon, welche Menge an Farbe 3 zunächst in dem Vorratsbehälter 5 vorhanden ist, kann der Benutzer von außen oder durch die Einlassöffnung 8 von oben exakt erkennen, wie der Rührstab zu positionieren ist, um den Pegel der Flüssigkeit 2 in Übereinstimmung mit einer der Messflanken 21 zu bringen und wie viel Verdünnungsmittel 4 zusätzlich einzufüllen ist, um eine Verdünnung der bereits vorhandenen Farbe 3 um 10 % zu erreichen. Der Messabstand 22 zwischen den Messflanken 21 der Messöffnungen 11 und der Messstege 12 können dabei variabel ausgestaltet sein, so dass auch Erhöhungen des Füllstandes um 5 %, 20 % oder dergleichen möglich sind.

Aus Figur 2 kann entnommen werden, dass an dem Rührstab 6 im Bereich der Einlassöffnung 8 des Vorratsbehälters 5 ein Arretierungssteg 17 verschwenkbar angeformt ist. Am freien Ende des Arretierungssteges 17 sind eine Vielzahl von Haltenasen 18 angearbeitet, die gemeinsam eine Riffelung bilden und senkrecht zu der Längsachse 7 des Rührstabes 6 verlaufen. Der Arretierungssteg 17 kann folglich über die Haltestege 18 an dem Außengewinde 9 des Vorratsbehälters 5 zuverlässig befestigt werden, so dass der Rührstab 6 an dem Vorratsbehälter 5 abgestützt ist. Die senkrecht von dem Arretierungssteg 17 abstehenden Schenkel dienen ausschließlich dazu, dass der Arretierungssteg 17 aus der von dem Rührstab 6 gebildeten Ebene herausgedrückt werden kann, um die Befestigung am Vorratsbehälter 5 vorzunehmen bzw. zu lösen.

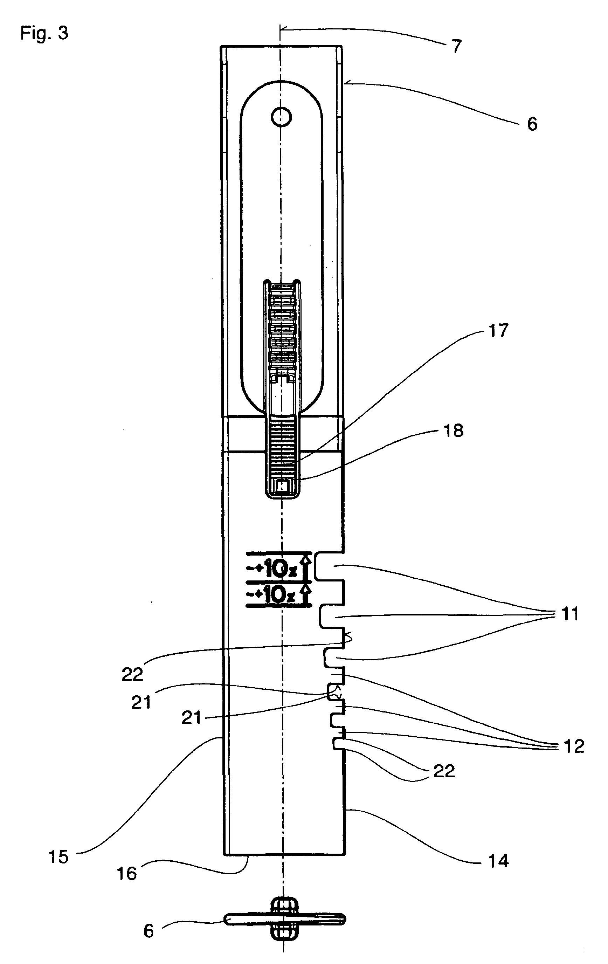

In Figur 3 ist zusätzlich angegeben, welchen geometrischen Querschnitts-Verlauf der Rührstab 6 über seine Längsachse 7 einnimmt, denn die mit 14 bezeichnete Schmalseite, in die die Messöffnungen 11 und die Messstege 12 eingearbeitet sind, ist in ihrer Breite geringer bemessen, als die gegenüberliegende Schmalseite 15.

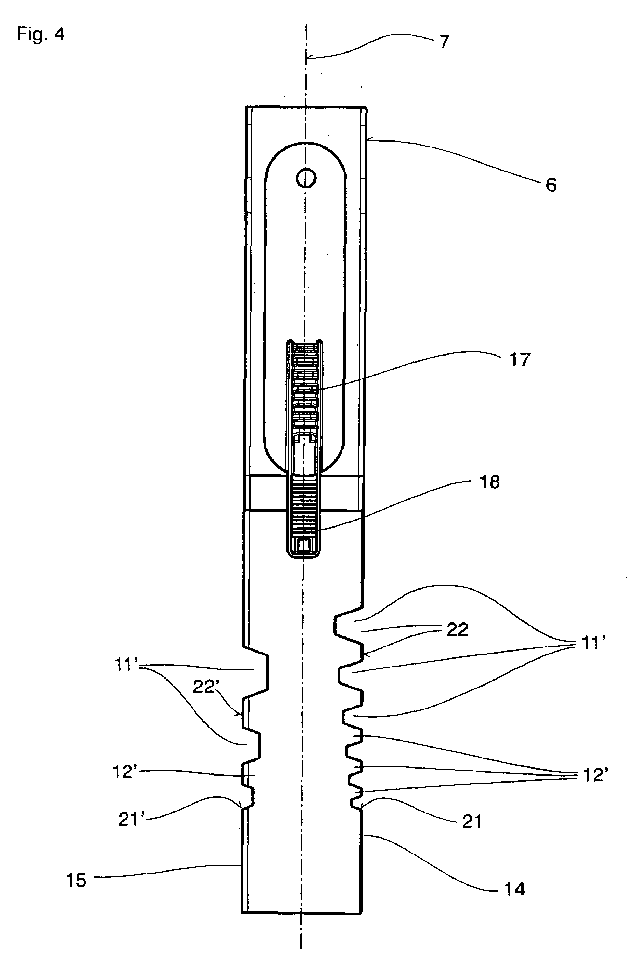

Zu Figur 4 wird gezeigt, dass auf beiden Schmalseiten 14 und 15 trapezförmig ausgestaltete Messöffnungen 11' und Messstege 12' eingearbeitet sind. Die sich gegenüberstehenden Messöffnungen 11' und 12' in den Schmalseiten 14 und 15 sind dabei in Richtung der Längsachse 7 des Rührstabes 6 versetzt zueinander angeordnet, verlaufen jedoch nach wie vor parallel zu der Längsachse 7, so dass die Füllstandsänderungen im Inneren des Vorratsbehälters 5 entlang der beiden Schmalseiten 14 und 15 des Rührstabes 6 in Abhängigkeit von der eingefüllten Farbe 3 und des Verdünnungsmittels 4 erkennbar sind.

Die trapezförmige Ausgestaltung der Messöffnungen 11 und der Messstege 12 erleichtern dem Benutzer das Ablesen der Füllstandshöhe, denn aufgrund der aus der Horizontalen geneigten Verlauf der Messflanken 21 kann exakter ermittelt werden, welche Füllstandshöhe gegenwärtig vorliegt und welche zusätzliche Menge an Verdünnungsmittel 4 in den Vorratsbehälter 5 eingefüllt wurde, da die Abdeckung der schrägen Messflanken 21 langsamer erfolgt als bei einem horizontalen Verlauf. Die Messflanken 21, die der Schmalseite 14 zugeordnet sind, weisen einen Messabstand von 10 % und die Messflanken 21, die auf der Schmalseite 15 eingearbeitet sind, weisen einen Messabstand 22 von 20 % auf.

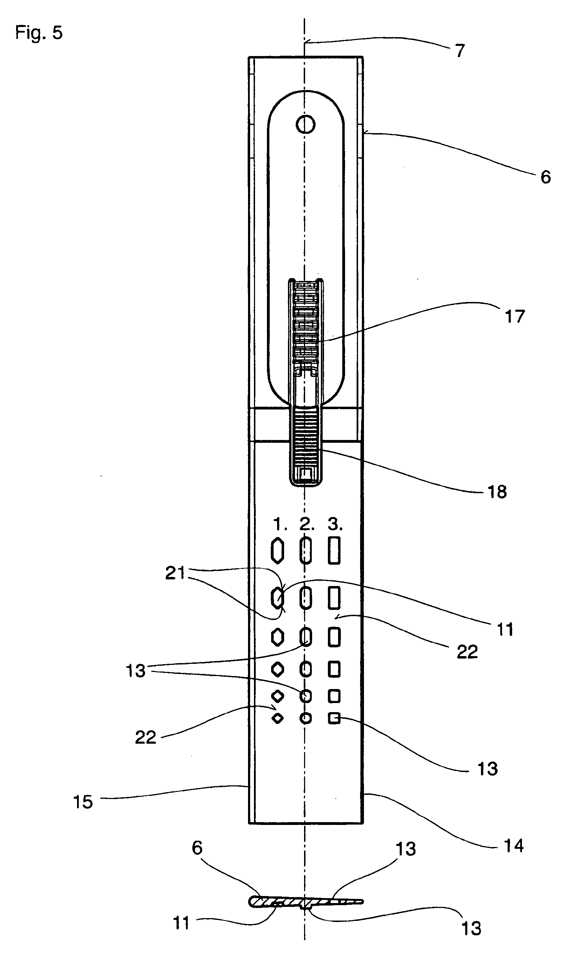

In Figur 5 wird gezeigt, dass in die Mantelfläche des Rührstabes 6 geometrisch unterschiedlich ausgestaltete Messöffnungen 11 eingearbeitet sein können. Des Weiteren wird dort angegeben, dass auch Messkörper 13, die aus der von dem Rührstab 6 gebildeten Ebene abstehen, an diesen angeformt sind. Die geometrische Form der Messöffnungen 11 oder der Messkörper 13 ist dabei derart gewählt, dass der Benutzer die Füllstandshöhe im Inneren des Vorratsbehälters 5 eindeutig ablesen kann, da die Messöffnungen 11 bzw. die Messkörper 13 den Messabstand 22 bilden und deren oberen und unteren Messflanken 21 als Bezugspunkt für die Volumenänderung dienen.

Die erste Reihe von Messöffnungen 11 ist dabei sechseckförmig ausgestaltet; ein Langloch wird durch zwei zueinander zulaufenden, schrägen Kanten abgeschlossen. Aufgrund dieser geometrischen Form kann der Benutzer in diesem Bereich exakt die Füllstandshöhe ablesen, denn je kleiner die sichtbare Fläche zwischen den beiden zulaufenden Kanten wird, desto weniger Verdünnungsmittel 4 ist einzufüllen, um das gewünschte Mischungsverhältnis für die jeweilige Füllstandshöhe zu erreichen.

Gleiches gilt für die elliptische Ausgestaltung der zweiten Reihe von Messkörpern 13. Die dritte Reihe ist mit rechteckförmigen Messkörpern 13 versehen, die auf die Oberfläche des Rührstabes 6 aufgedruckt sind. Diese drei unterschiedlich ausgestalteten Reihen können gemeinsam oder einzeln auf der Oberfläche eines Rührstabes 6 vorgesehen sein.

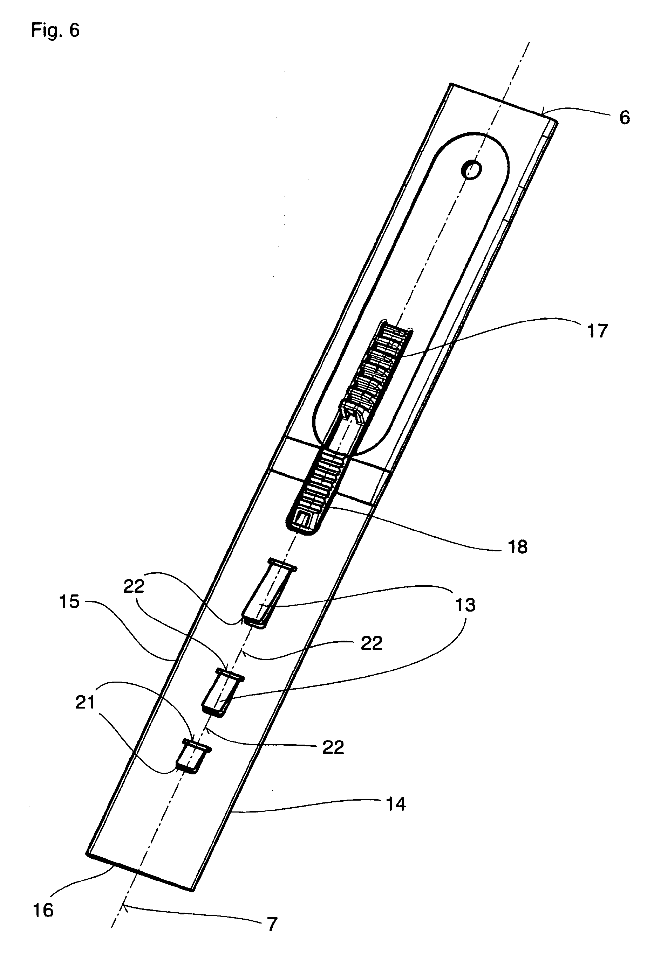

In Figur 6 ist ein Rührstab 6 abgebildet, der drei Messkörper 13 aufweist, die verschwenkbar an dem Rührstab 6 angelenkt sind, so dass diese für die Bestimmung der Füllstandshöhe aus der entsprechenden Öffnung im Rührstab 6 herausgedrückt werden, so dass diese von der Oberfläche des Rührstabes 6 geneigt verlaufend abstehen. Die geometrische Abmessung jedes Messkörpers 13 ist dabei an eine bestimmte prozentuale Einfüllmenge im Inneren des Vorratsbehälters 5 gekoppelt und ist als Messabstand 22 anzusehen. Auch der Abstand zwischen zwei benachbarten Messkörpern 13 entspricht einer entsprechend vorgegebenen Erhöhung des Füllstandes im Inneren des Vorratsbehälters 5; jeder der drei Messkörper 13 bildet folglich zwei zueinander beabstandete Messflanken 21, die als Orientierungslinie zur Volumenänderung verwendet werden können.

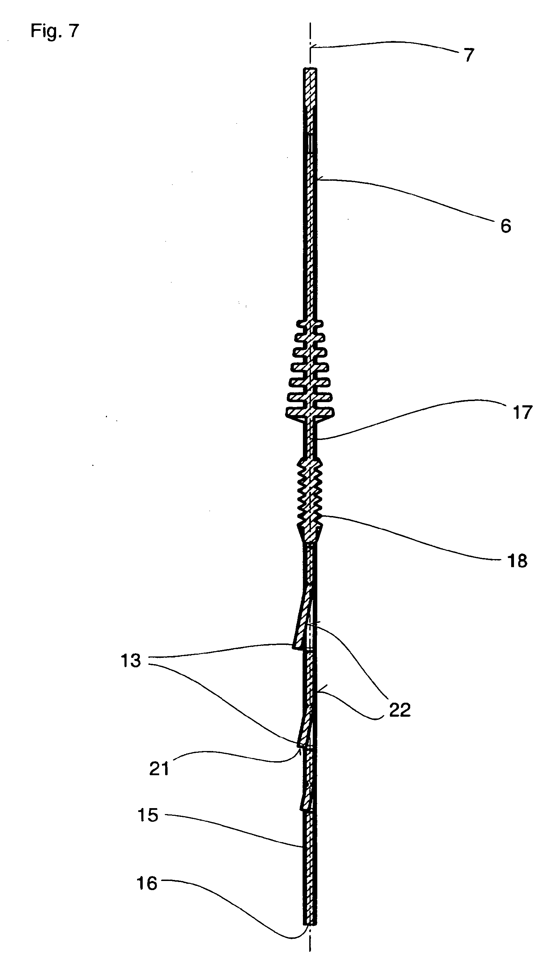

Insbesondere aus Figur 7 ist ersichtlich, dass die Messkörper 13 in die von dem Rührstab 6 gebildete Ebene zurückgeklappt werden können, um beispielsweise den Rührstab 6 im Bereich der Messkörper 13 auf einfache Art und Weise von Farbe 3 und Verdünnungsmitteln 4 zu säubern.

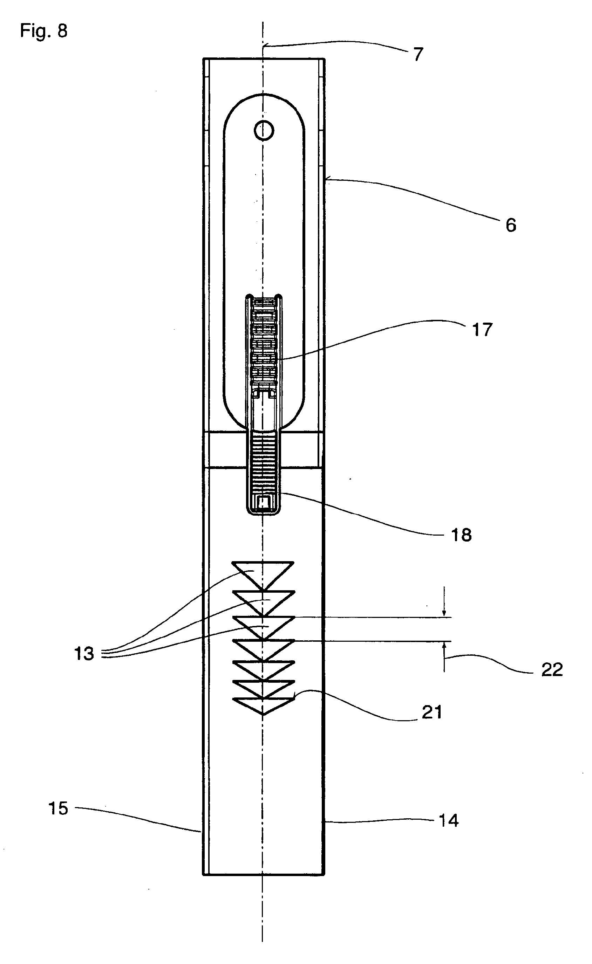

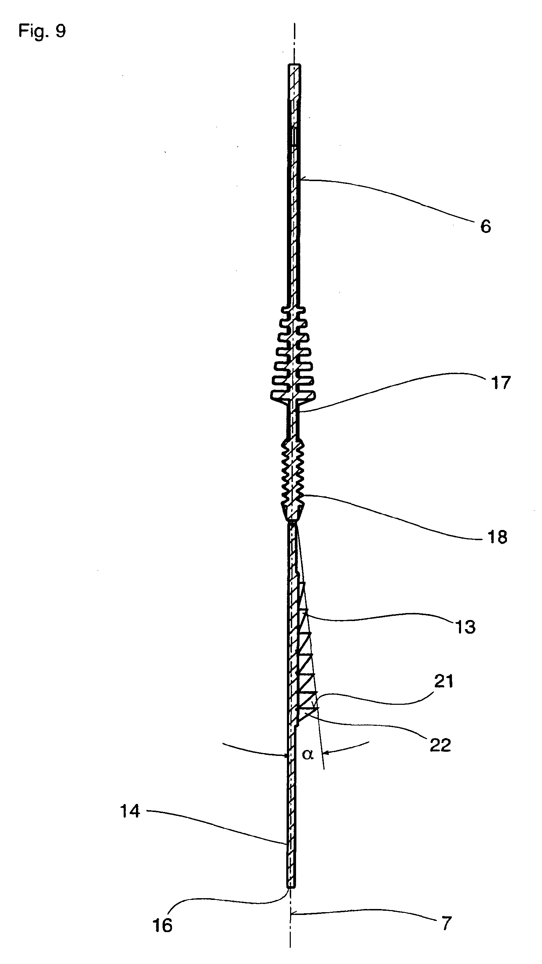

Die in den Figuren 8 und 9 dargestellten Messkörper 13 sind pyramidenförmig ausgestaltet. Insbesondere aus Figur 9 kann entnommen werden, dass der der Stirnseite 16 des Rührstabes 6 zugewandte Messkörper 13 senkrecht zu der Längsachse 7 größer bemessen ist, als der der Öffnung 8 des Vorratsbehälters 5 zugewandte Messkörper 13. Die zwischen diesen beiden äußeren Messkörpern 13 angeordneten Messkörper 13 weisen einen geometrischen Abstand von der von dem Rührstab 6 gebildeten Ebene auf, die zwischen den von den beiden äußeren Messkörpern 13 gebildeten Höhenabmessung angesiedelt ist. Dies bedeutet, dass die nach außen abstehende Messflanke 21 der Messkörper 13 gemeinsam auf einer Linie liegen, die um den Winkel aus der Ebene des Rührstabes 6 geneigt ist. Jeder Messkörper 13 bildet dadurch ein Maß für den prozentualen Messabstand 22.

Folglich kann der Benutzer beim Eintauchen des Rührstabes 6 in die Flüssigkeiten 2 durch die Einlassöffnung 8 erkennen, welcher Messkörper 13 durch den entsprechend vorhandenen Füllstand abgedeckt ist und welcher Messkörper 13 ggf. nach der Befüllung mit Verdünnungsmittel 4 als nächstliegender Messkörper 13 in die Flüssigkeiten 2 eintaucht. Die in Längsrichtung 7 verlaufende Höhenabmessung der jeweiligen Messkörper 13 entspricht dabei wieder einer bestimmten prozentualen Erhöhung des Füllstandes im Inneren des Vorratsbehälters 5.

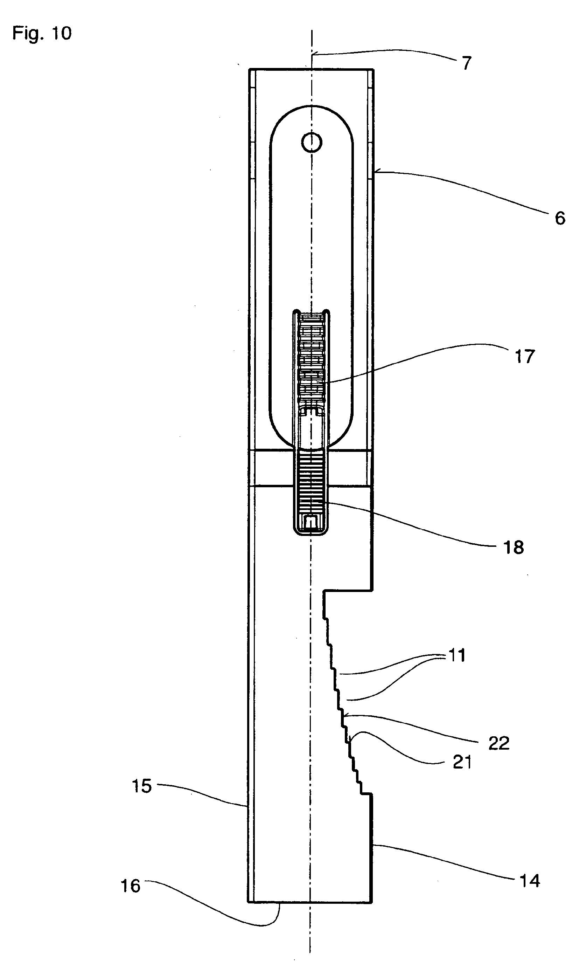

Der Figur 10 kann entnommen werden, dass in die Schmalseite 14 des Rührstabes 6 eine Messöffnung in Form einer Treppe eingearbeitet ist. Jede Stufe der Treppe kann als Messflanke 21 zur Pegelbestimmung und Volumenänderung verwendet werden. Die Höhe der jeweiligen Treppenstufe entspricht dem Messabstand 22. Der in Richtung der Längsachse 7 ausgerichtete Verlauf der Messöffnung 11 führt dazu, dass die Füllstandsänderungen von oben ohne weiteres erkennbar sind.

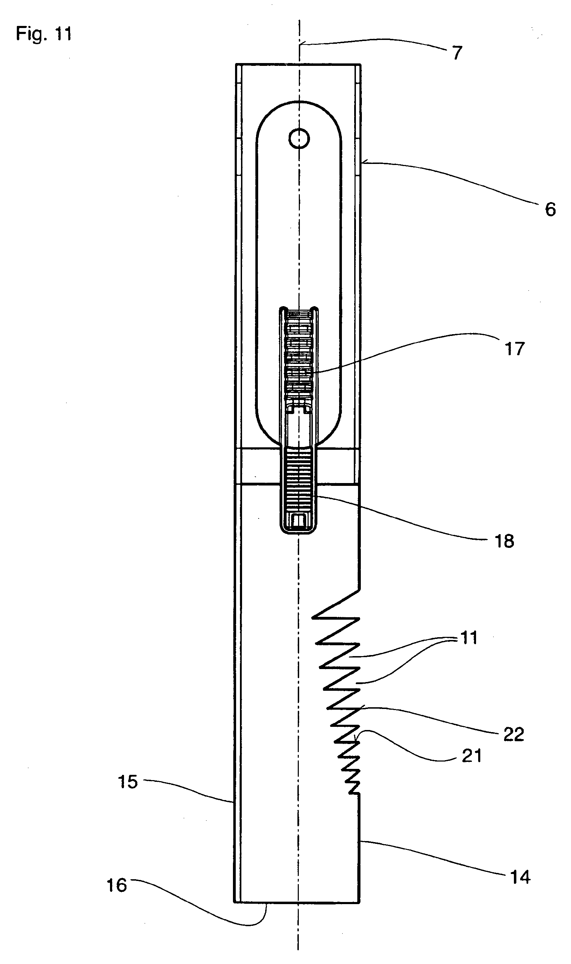

Die in Figur 11 gezeigte Ausgestaltung der Messöffnung 11 ist sägezahnförmig und gegenüber der Längsachse 7 geneigt, um zu ermöglichen, dass Änderungen des Füllstandes von oben abgelesen werden können. Auch durch die einzelnen Zähne wird eine Messflanke 21 gebildet, die als geeignete Linie zur Orientierung des Pegelstandes verwendbar ist. Der Abstand von zwei benachbarten Messflanken 21 steht im prozentualen Verhältnis des Messabstandes 22.

## Patentansprüche

1. Vorrichtung (1) zum Rühren und zum Dosieren des Mischungsverhältnisses von verschiedenartigen Flüssigkeiten (2), insbesondere von Farben (3) und Verdünnungsmitteln (4), bestehend aus einem Rührstab (6) und einem Vorratsbehälter (5), in dem die zu durchmischenden Flüssigkeiten (2) eingefüllt sind,
**dadurch gekennzeichnet,**
**dass** in dem Rührstab (6) mindestens zwei Messöffnungen (11) eingearbeitet sind, die in Richtung der Längsachse (7) des Rührstabes (6) zueinander beabstandet sind, und dass die parallel zur Längsachse (7) verlaufende Abmessung der jeweiligen Messöffnung (11) und der zwischen zwei benachbarten Messöffnungen (11) vorhandene Messsteg (12) derart ausgebildet sind, dass diese jeweils im Verhältnis zu der Füllstandshöhe der in dem Vorratsbehälter (5) eingebrachten Flüssigkeiten (2) stehen und dass der Pegel der Flüssigkeit (2), um das korrekte Mischverhältnis in der Flüssigkeit (2) in dem Vorratsbehälter (5) zu erreichen, in fluchtender Übereinstimmung mit einer der vorhandenen Messöffnungen (11) oder Messstege (12) steht.

2. Vorrichtung (1) zum Rühren und zum Dosieren des Mischungsverhältnisses von verschiedenartigen Flüssigkeiten (2), insbesondere von Farben (3) und Verdünnungsmitteln (4), bestehend aus einem Rührstab (6) und einem Vorratsbehälter (5), in dem die zu durchmischenden Flüssigkeiten (2) eingefüllt sind,
**dadurch gekennzeichnet,**
**dass** an mindestens einer Mantelfläche des Rührstabes (6) mindestens zwei Messkörper (13) angeformt sind, die in Richtung der Längsachse (7) des Rührstabes (6) und bezogen auf die Füllstandshöhe in dem Vorratsbehälter (5) zueinander beabstandet sind, und dass die jeweilige in Richtung der Längsachse (7) des Rührstabes (6) verlaufende Abmessung der Messkörper (13) im Verhältnis zu der Füllstandshöhe, die in dem Vorratsbehälter (5) vorhanden ist, steht.

3. Vorrichtung nach Anspruch 1 oder 2
**dadurch gekennzeichnet,**
**dass** die Messstege (12) und die Messkörper (13) jeweils zwei zueinander beabstandete Messflanken (21) aufweisen, die als Orientierungshilfe zur Bestimmung des Pegels im Inneren des Vorratsbehälters (5) verwendbar sind.

4. Vorrichtung nach Anspruch 3,
**dadurch gekennzeichnet,**
**dass** die Messöffnungen (11) als Einkerbungen ausgebildet sind, die in einer oder in beiden gegenüberliegenden Schmalseiten (14, 15) des Rührstabes (6) eingearbeitet sind, dass zwischen zwei benachbarten Einkerbungen (11) in einer der Schmalseiten (14 oder 15) der Messsteg (12) vorgesehen ist und dass die in Richtung der Längsachse (7) des Rührstabes verlaufende Höhe der Messöffnungen (11) und der Messstege (12) in Abhängigkeit von der Füllstandshöhe, die im Vorratsbehälter (5) erreicht ist, ausgebildet ist und als Messangabe für die zusätzlich eingebrachte Flüssigkeit (2) in den Vorratsbehälter (5) dient.

5. Vorrichtung nach Anspruch 4,
**dadurch gekennzeichnet,**
**dass** die durch die Messöffnungen (11) und die Messstege (13) gebildete Messskala einer Erhöhung des Füllstandes in dem Vorratsbehälter (5) um 5 %, 10 %, 20 % oder dgl. pro Messöffnung (11) bzw. Messsteg (12) entspricht.

6. Vorrichtung nach Anspruch 4,
**dadurch gekennzeichnet,**
**dass** die in die Schmalseite (14, 15) des Rührstabes (6) eingearbeiteten Messöffnungen (11) treppen- oder sägezahnförmig in Richtung der Längsachse (7) des Rührstabes (6) verlaufen.

7. Vorrichtung nach Anspruch 6,
**dadurch gekennzeichnet,**
**dass** die durch die Messöffnungen (11) gebildete Messskala geneigt zu der Längsachse (7) des Rührstabes (6) ausgerichtet ist, und dass die Messstege (12) als nach außen geneigte Messflanken (21) ausgebildet sind.

8. Vorrichtung nach Anspruch 2,
**dadurch gekennzeichnet,**
**dass** die Messkörper (13) unmittelbar benachbart und fluchtend zueinander angeordnet sind und dass der dem Boden (10) des Vorratsbehälters (5) zugewandte Messkörper senkrecht zu der Längsachse des Rührstabes größer ausgebildet ist als der Messkörper, der der Öffnung des Vorratsbehälters zugewandt ist, und dass die zwischen diesen beiden äußeren Messkörpern (13) angeordneten Messkörper (13) in ihrer räumlichen Ausdehnung senkrecht zu der Längsachse (7) des Rührstabes (6) an die räumliche Ausdehnung der
beiden äußeren Messkörper (13) derart angepasst sind, dass die höchsten Erhebungen der jeweiligen Messkörper (13) auf einer Linie liegen, die geneigt verlaufend zu der Längsachse (7) des Rührstabes (6) ausgerichtet ist.

9. Vorrichtung nach Anspruch 2,
**dadurch gekennzeichnet,**
**dass** die Messkörper (13) verschwenkbar an dem Rührstab (6) angelenkt und aus der von dem Rührstab (6) gebildeten Ebene nach außen ausklappbar sind.

10. Vorrichtung nach Anspruch 1,
**dadurch gekennzeichnet,**
**dass** die Messöffnungen (11) und die Messstege (12) rechteckförmig, dreieckförmig, rechteckig oder elliptisch ausgebildet sind.

11. Vorrichtung nach Anspruch 2,
**dadurch gekennzeichnet,**
**dass** die Messkörper (13) quader- oder pyramidenförmig ausgebildet sind.

12. Vorrichtung nach einem der vorgenannten Ansprüche,
**dadurch gekennzeichnet,**
**dass** die Messöffnungen (11), die Messstege (12) und/oder die Messkörper (13) parallel zu der Längsachse (7) des Rührstabes (6) und fluchtend zueinander verlaufen und dass der Abstand der Messstege (12) der Messöffnung (11) und der Messkörper (13) bzw. deren jeweilige Flächenabmessung proportional an die Volumenänderung im Inneren des Vorratsbehälters (5) angepasst sind.

13. Vorrichtung nach einem der vorgenannten Ansprüche,
**dadurch gekennzeichnet,**
**dass** an dem Rührstab (6) ein Arretierungssteg (17) angeformt ist, der von dem Rührstab (6) wegklappbar ist und der an dem Vorratsbehälter (5) zur Fixierung des Rührstabes (6) in diesen einklippsbar ist.

14. Vorrichtung nach Anspruch 13,
**dadurch gekennzeichnet,**
**dass** in den Arretierungssteg (17) eine Vielzahl von Haltestegen (18) in Form einer Riffelung, die senkrecht zu der Längsachse (7) des Rührstabes (6) verlaufen, eingearbeitet sind und dass eine der Haltestege (18) in ein an der Außenmantelfläche des Vorratsbehälters (5) eingearbeitetes Außengewinde (9) nach Art einer Hinterschneidung fixierbar ist.

15. Vorrichtung nach Anspruch 3,
**dadurch gekennzeichnet,**
**dass** der Rührstab (6) im montiertem Zustand auf den Boden (10) des Vorratsbehälters (5) aufgesetzt ist oder dass der Rührstab (6) derart an dem Vorratsbehälter (5) positionierbar ist, dass die Messflanke (21) fluchtend zu dem Flüssigkeitspegel (2) ausgerichtet ist.

## Claims

1. A device (1) for stirring and for metering the mixing ratio of various kinds of fluid (2), in particular of paints (3) and thinning agents (4), comprising a stirring stick (6) and a reservoir container (5) in which the fluids (2) to be mixed together are filled,
**characterized in that,**
the stirring stick (6) has got at least two measuring openings (11) worked into it, which are spaced apart in the direction of the lengthways axis (7) of the stirring stick (6), that the dimension of the particular measuring opening (11) measured parallel to the lengthways axis (7), and the measuring web (12) remaining between two adjacent measuring openings (11), are configured in relation to the fill level of the fluids (2) that are put into the reservoir container (5) and that the level of fluid (2) for achieving the correct mixing ratio of the fluid (2) in the reservoir container (5) is in alignment with one of the existing measuring openings (11) or measuring webs (12).

2. A device (1) for stirring and for metering the mixing ratio of various kinds of fluid (2), in particular of paints (3) and thinning agents (4), comprising a stirring stick (6) and a reservoir container (5) in which the fluids (2) to be mixed together are filled,
**characterized in that,**
at least one jacket surface of the stirring stick (6) has got at least two measuring bodies (13) formed on it, which are spaced at intervals from one another in the direction of the lengthways axis (7) of the stirring stick (6) and in relation to the fill level in the reservoir container (5), and that the dimension of the measuring bodies (13) running in the direction of the lengthways axis (7) of the stirring stick (6) is configured in relation to the fill level in the reservoir container (5).

3. The device in accordance with Claim 1 or 2,
**characterized in that,**
the measuring webs (12) and the measuring bodies (13) each have measuring flanks (21) spaced apart from one another, which can be used as a means of orientation when determining the level inside the reservoir container (5).

4. The device in accordance with Claim 3,
**characterized in that,**
the measuring openings (11) are configured as notches worked into one or both opposite narrow sides (14, 15) of the stirring stick (6), that the measuring web (12) is provided between two adjacent notches (11) in one of the narrow sides (14 or 15) and that the height of the measuring openings (11) running in the direction of the lengthways axis (7) of the stirring stick and of the measuring webs (12) is configured in accordance with the fill level reached in the reservoir container (5), and serves as a measurement value for the amount of additional fluid (2) added to the reservoir container (5).

5. The device in accordance with Claim 4,
**characterized in that,**
the measuring scale formed by the measuring openings (11) and the measuring webs (13) corresponds to an increase in the fill level in the reservoir container (5) by 5%, 10%, 20% or the like for each measuring opening (11) or measuring web (12).

6. The device in accordance with Claim 4,
**characterized in that,**
the measuring openings (11) worked into the narrow side (14, 15) of the stirring stick (6) have a stepped or saw-tooth shape running in the direction of the lengthways axis (7) of the stirring stick (6).

7. The device in accordance with Claim 6,
**characterized in that,**
the measuring scale formed by the measuring openings (11) is aligned at an angle in relation to the lengthways axis (7) of the stirring stick (6), and that the measuring webs (12) are configured as measuring flanks (21) that are angled outwards.

8. The device in accordance with Claim 2,
**characterized in that,**
the measuring bodies (13) are arranged immediately adjacent to and flush with one another and that the measuring body facing the base (10) of the reservoir container (5) perpendicular to the lengthways axis of the stirring stick is larger than the measuring body facing the opening of the reservoir container, and that the measuring bodies (13) arranged between these two outer measuring bodies (13) have their spatial arrangement at right angles to the lengthways axis (7) of the stirring stick (6) adapted to the spatial arrangement of the two outermost measuring bodies (13) in such a way that the highest projections on the particular measuring bodies (13) run in a line oriented at an angle to the lengthways axis (7) of the stirring stick (6).

9. The device in accordance with Claim 2,
**characterized in that,**
the measuring bodies (13) are articulated on the stirring stick (6) in order to allow them to pivot and can be folded outwards out of the plane formed by the stirring stick (6).

10. The device in accordance with Claim 1,
**characterized in that,**
the measuring openings (11) and the measuring webs (12) are rectangular, triangular, square or elliptical in shape.

11. The device in accordance with Claim 2,
**characterized in that,**
the measuring bodies (13) are block-shaped or pyramid-shaped.

12. The device in accordance with one of the aforementioned claims, **characterized in that,**
the measuring openings (11), the measuring webs (12) and/or the measuring bodies (13) run in parallel to the lengthways axis (7) of the stirring stick (6) and flush with one another, and that the distances between the measuring webs (12), the measuring opening (11) and the measuring bodies (13) and/or their particular surface area dimension are proportionately adapted to the change in volume inside the reservoir container (5).

13. The device in accordance with one of the aforementioned claims,
**characterized in that,**
the stirring stick (6) has a locking web (17) formed onto it, which can be folded away from the stirring stick (6) and that can be clipped onto the reservoir container (5) in order to fix the stirring stick (6) into the reservoir container (5).

14. The device in accordance with Claim 13,
**characterized in that,**
a plurality of retaining webs (18) is worked into the locking web (17) in the form of fluting, running at right angles to the lengthways axis (7) of the stirring stick (6), and that one of the retaining webs (18) can be fixed into an external thread (9) worked into the outer jacket surface of the reservoir container (5) in the form of an undercut.

15. The device in accordance with Claim 3,
**characterized in that,**
the stirring stick (6) is in contact with the base (10) of the reservoir container (5) when it is installed, or that the stirring stick (6) can be positioned on the reservoir container (5) in such a way that the measuring flank (21) is aligned flush with the level of the fluid (2).

## Revendications

1. Dispositif (1) pour remuer et doser le taux de mélange de divers liquides (2), en particulier de peintures (3) et de diluants (4), comprenant un bâtonnet d'agitation (6) et un réservoir (5) contenant les liquides à remuer (2),
**caractérisé en ce que**,
dans le bâtonnet d'agitation (6), il est pratiqué au moins deux ouvertures de mesure (11) espacés entre eux et s'étendant en direction de l'axe longitudinal (7) du bâtonnet d'agitation (6), et que la dimension de l'ouverture de mesure respective (11) s'étendant parallèle à l'axe longitudinal (7) ainsi que la traverse de mesure (12) disposée entre deux ouvertures de mesure voisines (11) sont conçues de sorte qu'elles se trouvent respectivement en relation avec le niveau de remplissage des liquides (2) remplis dans le réservoir (5), et que, afin d'obtenir le taux de mélange correct du liquide (2) dans le réservoir (5), le niveau du liquide (2) se trouve en alignement précis avec une des ouvertures de mesure (11) ou des traverses de mesure (12).

2. Dispositif (1) pour remuer et doser le taux de mélange de liquides différents (2), en particulier de peintures (3) et de diluants (4), comprenant un bâtonnet d'agitation (6) et un réservoir (5) contenant les liquides à remuer (2),
**caractérisé en ce que**
sur au moins une surface latérale du bâtonnet d'agitation (6), il est prévu au moins deux corps de mesure (13) espacés en direction de l'axe longitudinal (7) du bâtonnet d'agitation (6) et avec référence au niveau de remplissage dans le réservoir (5), et que la dimension respective des corps de mesure (13) s'étendant en direction de l'axe longitudinal (7) du bâtonnet d'agitation (6) se trouve en relation avec le niveau de remplissage dans le réservoir (5).

3. Dispositif d'après les revendications 1 ou 2,
**caractérisé en ce que**
les traverses de mesure (12) et les corps de mesure (13) possèdent respectivement des flancs de mesure (21) espacés l'un par rapport à l'autre et qui servent d'orientation pour la détermination du niveau de remplissage dans le réservoir (5).

4. Dispositif d'après la revendication 3,
**caractérisé en ce que**
les ouvertures de mesure (11) sont conçues sous la forme d'entailles pratiquées dans un ou dans les deux petits côtés opposés (14, 15) du bâtonnet d'agitation (6), que, entre deux entailles voisines (11), dans un des côtés opposés (14, 15), il est prévu la traverse de mesure (12), et que la hauteur des ouvertures de mesure (11) et des traverses de mesure (12) s'étendant en direction de l'axe longitudinal (7) du bâtonnet d'agitation (6) est conçue en dépendance du niveau de remplissage dans le réservoir (5) puis sert d'indication de mesure pour le liquide supplémentaire (2) versé dans le réservoir (5).

5. Dispositif d'après la revendication 4,
**caractérisé en ce que**
l'échelle de mesure formée par les ouvertures de mesure (11) et les traverses de mesure (12) correspond à une augmentation du niveau de remplissage dans le réservoir (5) de l'ordre de 5 %, de 10 %, de 20 % etc. par ouverture de mesure (11) ou par traverse de mesure (12).

6. Dispositif d'après la revendication 4,
**caractérisé en ce que**
les ouvertures de mesure (11) pratiquées dans le petit côté (14, 15) du bâtonnet d'agitation (6) s'étendent sous la forme de gradins ou de dents de scie en direction de l'axe longitudinal (7) du bâtonnet d'agitation (6).

7. Dispositif d'après la revendication 6,
**caractérisé en ce que**
l'échelle de mesure formée par les ouvertures de mesure (11) est orientée inclinée par rapport à l'axe longitudinal (7) du bâtonnet d'agitation (6), et que les traverses de mesure (12) sont conçues sous la forme de flancs de mesure (21) inclinées vers l'extérieur.

8. Dispositif d'après la revendication 2,
**caractérisé en ce que**
les corps de mesure (13) sont directement avoisinants et en malignement précis l'un par rapport à l'autre, et que le corps de mesure donnant sur le fond (10) du réservoir (5) est plus grand perpendiculairement à l'axe longitudinal (7) du bâtonnet d'agitation (6) que le corps de mesure donnant sur l'ouverture du réservoir (5), et que l'extension des corps de mesure (13) disposés entre des deux corps de mesure extérieurs (13) perpendiculaire à l'axe longitudinal (7) du bâtonnet d'agitation (6) est adaptée à l'extension des deux corps de mesure extérieurs (13) de sorte que les élévations les plus hautes des corps de mesure respectifs (13) se trouvent sur une ligne inclinée par rapport à l'axe longitudinal (7) du bâtonnet d'agitation (6).

9. Dispositif d'après la revendication 2,
**caractérisé en ce que**
les corps de mesure (13) sont articulés de manière pivotante sur le bâtonnet d'agitation (6) et se laissent pivoter vers l'extérieur hors du plan formé par le bâtonnet d'agitation (6).

10. Dispositif d'après la revendication 1,
**caractérisé en ce que**
les ouvertures de mesure (11) et les traverses de mesure (12) ont une forme à peu près rectangulaire, ou triangulaire, rectangulaire ou elliptique.

11. Dispositif d'après la revendication 2,
**caractérisé en ce que**
les corps de mesure (13) ont la forme d'un cube ou d'une pyramide.

12. Dispositif d'après une des revendications précédentes,
**caractérisé en ce que**
les ouvertures de mesure (11), les traverses de mesure (12) et/ou les corps de mesure (13) s'étendent parallèles à l'axe longitudinal (7) du bâtonnet d'agitation (6) et en alignement précis entre eux et que l'écartement des traverses de mesure (12), de l'ouverture de mesure (11) et des corps de mesure (13) où leurs dimensions de surface respectives sont proportionnels au changement de volume à l'intérieur du réservoir (5).

13. Dispositif d'après une des revendications précédentes,
**caractérisé en ce que**
sur le bâtonnet d'agitation (6), il est formé une traverse d'arrêt (17) qui se laisse déplier du bâtonnet d'agitation (6) et qui se laisse accrocher sur le réservoir (5) pour fixer le bâtonnet d'agitation (6).

14. Dispositif d'après la revendication 13,
**caractérisé en ce que**
dans la traverse d'arrêt (17), il est pratiqué de nombreuses traverses d'arrêt (18) sous la forme d'une cannelure s'étendant perpendiculairement à l'axe longitudinal (7) du bâtonnet d'agitation (6) et qu'un des traverses d'arrêt (18) se laisse fixer semblable à une contre-dépouille sur le filetage extérieur (9) prévu sur l'enveloppe extérieure du réservoir (5).

15. Dispositif d'après la revendication 3,
**caractérisé en ce que**,
en état monté, le bâtonnet d'agitation (6) repose sur le fond (10) du réservoir (5) et que le bâtonnet d'agitation (6) se laisse positionner sur le réservoir (5) de sorte que le flanc de mesure (21) se trouve en alignement précis sur le niveau du liquide (2).
